Europäisches Patentamt

European Patent Office

Office européen des brevets

(11) Publication number: **0 356 576**
**A2**

(12) **EUROPEAN PATENT APPLICATION**

(21) Application number: 88116892.6

(22) Date of filing: 12.10.88

(51) Int. Cl.5: **B32B 7/02 , B32B 27/30 , B32B 27/32 , B32B 1/02 , B65D 25/44**

(30) Priority: 30.08.88 US 238198

(43) Date of publication of application:
07.03.90 Bulletin 90/10

(84) Designated Contracting States:
AT BE CH DE ES FR GB GR IT LI LU NL SE

(71) Applicant: MBM MASCHINENBAU MÜHLDORF GMBH
Münchener Strasse 84
D-8260 Mühldorf a. Inn(DE)

(72) Inventor: Weber, Heinz
64, Gables Court, Beaconsfield Ave
Quebec(CN)

(74) Representative: Troesch, Jacques J., Dr. sc. nat.
Walchestrasse 19
CH-8035 Zürich(CH)

(54) Layer structure and container with such a layer structurs.

(57) A container has a layer structure, comprises at least two compatible layers, integrally bonded together, one layer being formed of a substantially rigid plastic material, to allow said layer structure to be used or formed according to mechanical properties of said one layer. The other layer is formed of a substantially flexible plastic material to allow said layer structure to keep tightness properties of said flexible plastic material when being used or formed according to said properties of said one layer. This layer structure fulfils the three following conditions:
a) to maintain a shape into which it is brought,
b) to allow for frequent change of this shape and
c) to maintain tightness even on frequent changements of that shape.

FIG.5

FIG. 1

1a

## Layer structure and container with such a layer structure

The present invention relates to a layer structure and a container with such a layer structure.

Layer structures made of plastic material are known since long and are frequently used in different configurations and parts of containers. According to the use of such layer structures one encounters often the need to form such a layer structure mechanically by bending or folding into a desired shape, whereby the layer structure should maintain such a shape. This is for instance the case for tubes of such layer structures as for flexible tubes in car production, flexible tubes for container spouts etc. In such applications it is frequently encountered that such preformable and substantial form maintaining structures are loaded during their lifetime by frequent shape deformations as for instance the mentioned tubes for car application due to engine vibrations or the mentioned container spout tube by frequent bending or flexing such spout tubes according to the momentarily needed optimal spout shape. This leads to the problem that such layer structures made of one layer of plastic material must on one hand fulfil the target of being deformable and then substantially maintaining a shape in which they are brought, must further withstand frequent changements of their shape and must further maintain tightness. These three conditions are very hard to fulfil, because the necessity of keeping the shape into which the structure is brought, makes it necessary to have the layer made of a substantially rigid material which rigid material will break when it is loaded by frequent shape changements. Such breaking will clearly affect the third condition, i.e. that of tightness. For example, if a one layer structure is formed to an accordion shaped tube, as is well known for instance in car or container applications, the one layer structure for such tube must be of rigid material, so that the tube may be flexed on one hand, but will maintain its flexed position.

If such a relatively rigid material accordion structure tube is then loaded by frequent changements of shape as by mechanical vibration or by frequent changements of its flexation, the accordion structure will tend to break especially at its accordion rib corners, due to the fact that the one layer material was chosen to be relatively rigid to keep a shape into which it was brought.

Thus, the present application has the object to propose a layer structure which fulfils all three above mentioned conditions, i.e.

a) maintains a shape into which it is brought,

b) allows for frequent change of this shape and

c) maintains tightness even on frequent changements of that shape.

This object is fulfilled by providing a layer structure as defined in claim 1.

The present application further proposes a container according to claim 4.

Preferred embodiments of the inventive layer structure and/or the container with such a layer structure are defined in claims 2, 3 and 5 to 22.

A process to produce the inventive layer structure is defined by claim 23, preferred realizations of that process and especially directed for that process in container production are defined by the further claims 24 to 32.

Thus the present invention relates to a plastic container too with an integral flexible neck that can be flexed from an upright position through e.g. approximately 90°. The present invention further provides an integral neck of a container which is formed of two compatible coextruded plastic materials.

Containers with integral flexible necks that can be flexed through e.g. approximately 90° are used for pouring liquids such as oil, brake fluids, anti freeze, windshield washer fluids etc. into filling apertures. These containers with flexible necks are generally injection blow molded or extrusion blow molded from a single plastic material, and it has been found that the flexible neck portion is invariably weak which results in cracking or breaking. This is particularly true with neck portions having accordion shaped ribs, as it is true for one layer structures with such configuration in general. Furthermore, it is found that containers or other such structured layer structures formed of high density polyethylene used for bleach or some types of detergents may have stress cracking occurring in the neck portion. This stress cracking is due to a reaction between the liquid in the container and the container material.

One example of a container with an integral flexible neck is shown in my U.S. Patent 4,492,324 issued January 8, 1985. Whereas the shape of this material satisfies the demands of the market, I have found that some breakage occurs at the corners between the walls forming the ribs of the neck portion. This problem was partially overcome by arranging for extrusion of the plastic resin material to provide a thicker profile at the corner. I found that this was achieved by utilizing a computer program with a variable flow extruder to extrude more material into the corners. However, this only partially overcame the problem, the breakage still oc curred. The problem was even more defined if the increased thickness of material being extruded did not occur at the corner, the increased stress cracking occurred. I further found that the problem of cracking and breaking in the neck portion can be overcome by coextruding two different plastic resin materials which are compatible and readily fuse together at their boundary layer so they become integrally bonded together. By molding the outer layer with a substantially rigid plastic material and a second layer with a substantially flexible plastic material, I avoid the breakage in the corners. By utilizing the flexible plastic material on the inside of the neck portion stress cracking due to reaction between the liquid in the container and the container is avoided.

The thickness of the two or more layers of material can vary depending on the need and the application of the container. In one embodiment, it is preferred to have the flexible plastic material layer less thick than the rigid plastic material layer.

By injection moulding a preform or parison which has the necessary material distribution of the two or more materials along its length, the proper forming of the container in the blow station is obtained. All these considerations based first on container problems may be done for other non-container and non-tube-like applications of one layer plastic material structures where similar requirements must be fulfilled as was discussed above.

The present invention also provides a container having integral therewith a flexible neck portion with a smaller cross sectional area than the container, the neck portion comprising a plurality of shaped accordion ribs around the neck portion extending for at least a part of the length of the neck portion such that an integral pouring spout at the end of the neck portion can be flexed to a flexed position from an upright position to accommodate pouring and generally retain the flexed position, the neck portion formed of at least two compatible layers integrally bonded together, one layer formed of a substantially rigid plastic material and the other layer formed of a substantially flexible plastic material.

The rigid material is preferably on the outside of the neck portion and may be a high density polyethylene, in which case the flexible plastic material is preferably a low density polyethylene or copolymer. In another embodiment, the rigid plastic material is rigid polyvinyl chloride and the flexible material is a flexible polyvinyl chloride. The thicknesses of the layers may vary along the length of the neck portion and either a constant ratio may be maintained between the two layers or, alternatively, it may be varied for the length of the neck portion. A layer of the flexible plastic material may extend throughout the inside of the container body or may only extend for the length of the neck portion. An additional layer such as a barrier layer may be coextruded between the substantially rigid layer and substantially flexible layer, however, the barrier layer must be compatible with the other two layers so that they fuse together on the boundary layers.

The present invention also provides for a process of forming the inventive layer structure or a plastic container with such structure and having integral therewith a flexible neck portion including a plurality of shaped accordion ribs around the neck portion extending for at least the length of the neck portion, wherein a parison of hot plastic material is extruded and subsequently blow molded in a mold, the improvement comprising the steps of: coextruding at least the neck portion of the parison with at least two compatible layers integrally bonded together, one layer of a substantially rigid plastic material and a second layer of substantially flexible plastic material.

In drawings which illustrate embodiments of the invention as a preferred example, at a container,

Fig. 1 is a side elevational view of one embodiment of the container having a flexible neck portion integral therewith and known in the prior art,

Fig. 2 is a sectional view of an extended parison showing two coextruded layers for a neck portion according to the present invention,

Fig. 3 is a detail sectional view of the neck portion of the parison shown in Fig. 2,

Fig. 4 is a partial sectional view of a parison with coextruded layers according to another embodiment of the invention,

Fig. 5 is a partial sectional view of a neck portion blown in a mold from the parison shown in Fig. 4,

Fig. 6 is a partial sectional view of a parison showing different thicknesses of coextruded layers along the length of the neck portion,

Fig. 7 is a partial sectional view of the neck portion blown in a mold from the parison shown in Fig. 6,

Fig. 8 is a partial sectional view of another embodiment of a neck portion blown in a mold having two layers with a barrier layer extruded therebetween,

Fig. 9a a generic schematical view of a known one-layer structure of plastic material, its bending to a desired form to be maintained and the result on such a layer structure if it is frequently deformed,

Fig. 9b in a representation according to fig. 9a the occurrences with an inventive at least two layer structure,

Fig. 10 shows in a perspective view an accordion shaped tube as for the use in car production to be inventively produced by the inventive layer structure as shown in fig. 9b,

Fig. 11 a tube according to fig. 10 without accordion structure as for use in car production which becomes possible by the use of the inventive layer structure according to fig. 9b.

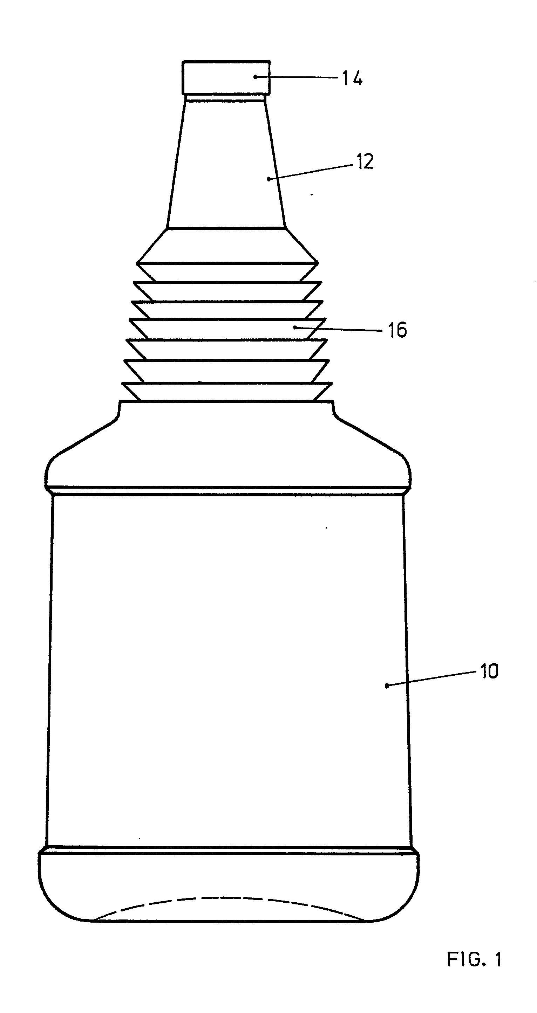

Referring to the drawings, fig. 1 shows a container with an integral flexible neck 12 having a spout 14 and a plurality of shaped accordion ribs 16 ex tending for approximately half the length of the neck portion 12. This container, which is of the known type of containers and is substantially disclosed in Patent 4,492,324, permits the spout 14 to be flexed to an angle of approximately 90° from the axis of the container 10 and also allows the container to retain the flexed shape so that the contents of the container can be poured into a receptacle or access opening which may be difficult to reach. Examples of such container uses include windshield washer containers engine oil filling openings in automobiles, and filling openings on small motorized machines such as lawn mowers, snow blowers and the like. In general, the containers, similar to that shown in fig. 1, are made of high density polyethylene or rigid polyvinylchloride as this material does permit the neck to be flexed and retain its shape after the flexing step.

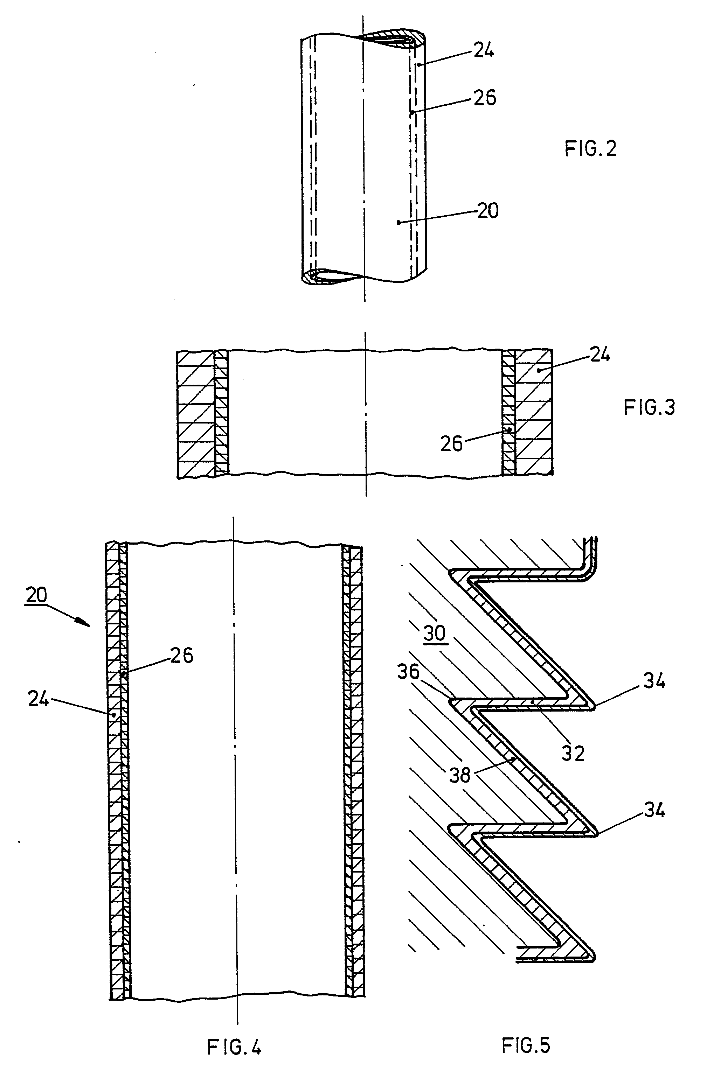

Figs. 2 and 3 illustrate an extruded parison 20 which in the top or neck portion 22 as shown in fig. 2 has two layers, an outside layer 24 which is of the same plastic material as the remainder of the parison that is formed into the container and an inside layer 26 which in this embodiment extends only for the neck portion. In the embodiment shown, the outer layer of plastic material 22 is a rigid plastic material with the inner layer being a flexible plastic material coextruded in the parison. The two plastic materials readily fuse together on the boundary layer so they become integrally bound together. In the parison state, both materials are hot and in a plastic state the parison is then transferred to a mold and blown from within the parison to take up the shape of the mold.

Fig. 3 illustrates one embodiment of a parison wherein the outer layer 24 represents approximately 90% of the overall thickness of the parison, the inner layer 26 representing the other 10%. It has been found that the flexible inner layer 26 may be less than 10% of the thickness of the parison, in some cases as low as 3%, and hence the neck portion of the molded container. The flexible inner layer 26 has the effect of an inner tube in a pneumatic tire and provides break and tear resistance for the container. The inner layer 26 also reduces stress cracking on the container when used with liquids such as some detergents and bleaches which react with some rigid plastic materials.

Fig. 4 illustrates a parison with an inner layer 26 and outer layer 24 having substantially the same thickness throughout the length of the neck portion.

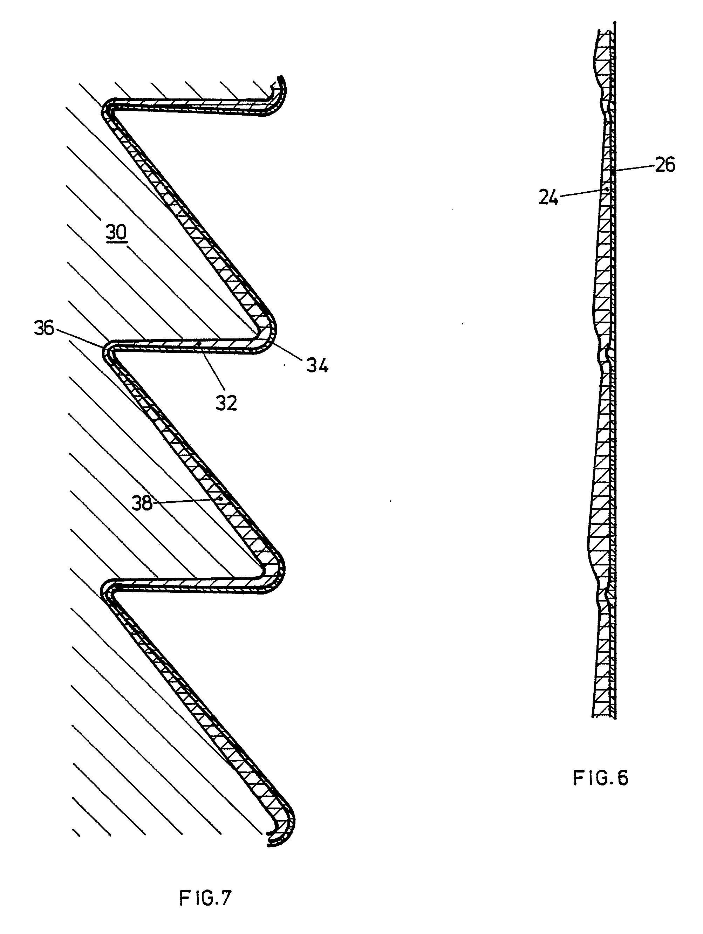

Fig. 5 illustrates the neck portion blow molded in a mold 30, the accordion ribs have a substantially horizontal wall 32 which extends out from an inner corner 34 to an outer corner 36 in the form of a saw tooth. A tapered wall 38 extends from the outer corner down to the lower inner corner 34. Whereas the illustration shows a particular configuration of ribs, many other configurations wherein the walls are sloped in different zig/zag or accordion shape may be provided. Fig. 5 illustrates a neck portion which has substantially the same thickness of inner layer and outer layer.

Figs. 6 and 7 illustrate another embodiment wherein the parison 20 has a varying thickness along its length which when expanded into a mold 30, produces an increased thickness in the tapered wall 38. As can be seen, the inner layer 26 has substantially the same thickness throughout the neck portion and it is the rigid or inner layer 24 which varies in thickness.

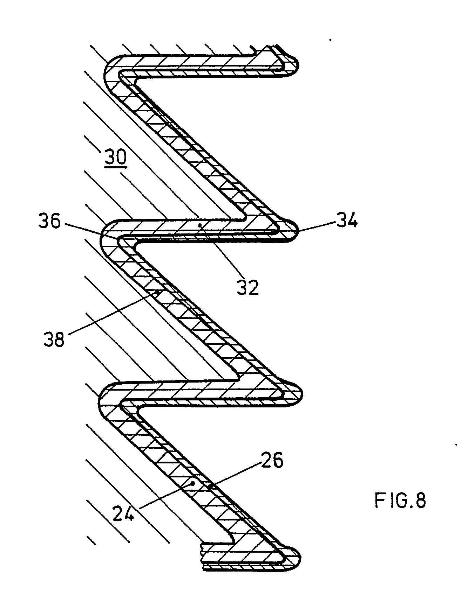

Fig. 8 illustrates another embodiment of a neck portion expanded in a mold 30 wherein the outer layer 24 has substantially the same thickness throughout the length of the neck portion, but the inner layer 26 has increased thickness at the outside corners 36 and the inside corners 34. Furthermore, Fig. 8 illustrates a barrier layer 40 which is coextruded with the outer layer 24 and the inner layer 34. The barrier layer is of compatible plastic material integrally bonded between the two layers and fused readily between the two layers so that it cannot separate.

Variation of the thickness for the outer layer 24 and the inner layer 26 is achieved by programming the flow of molten plastic material delivered to the extruder head. One type of programmer has 99 points wherein the flow rate for either the inner layer 26 or outer layer 24 can be changed. Thus by programming the extruder in advance, the thickness of the neck portion can be made so that the ratio of the inner layer 26 to the outer layer 20 is always constant or, alternatively, so that the ratio varies to suit the particular configuration of neck portion thus some corners or some walls may have increased thicknesses, either for the inner layer or for the outer layer or for both.

It is preferred that the rigid layer be the outside layer of the neck portion 24, however, in certain circumstances, the flexible layer may be placed on the outside. Whereas fig. 2 shows the parison 20 only having the inner layer 26 extending for the neck portion. Under certain circumstances and where required, the inner layer may extend for the complete length of the parison so that when a container is blown in a mold it is completely lined with a separate plastic material which may be a flexible plastic material. Furthermore, the liner in the container may be considerably thinner than the inner layer of the neck portion.

High density polyethylene is a suitable material for forming a container with an integral flexible neck portion formed therewith. The inner layer is preferably a low density polyethylene or a special copolymer that is flexible and fuses readily on the boundary layer with high density polyethylene. In another embodiment, a rigid polyvinylchloride represents one layer and a flexible polyvinylchloride forms the flexible layer which is integrally extruded into a parison. Polypropylene and polypropylene copolymers may be used as well as rigid and flexible nylon material. In one embodiment a container for oil was produced with a high density polyethylene as an outside layer and a low density polyethylene copolymer as an inside layer. The extruded parison had the outside layer approximately 90% of the wall thickness which was .060″. This wall thickness was reduced by about half when the container was blown in the blowing station, but the ratio of outside layer to inside layer remained about the same. Tests showed that the neck portion stood up to one thousand flexings to the maximum position of 90° from the axis of the container without any visible deterioration or delamination of the two separate layers.

Various changes may be made to the embodiments described herein without departing from the scope of the present invention which is limited only by the following claims.

The invention, i.e. the two layer structure and the process for its manufacturing by coextrusion, has been described for one preferred example, namely that of container spout application. As was described in the introductory part of the present application, the inventive two layer structure concept may be used for many other applications, as for car manufacturing application as will be described now.

With respect to the process for manufacturing such two layer structures for other applications, the same is valid as was described with respect to container application, i.e. such a two layer structure will preferably be manufactured by coextrusion.

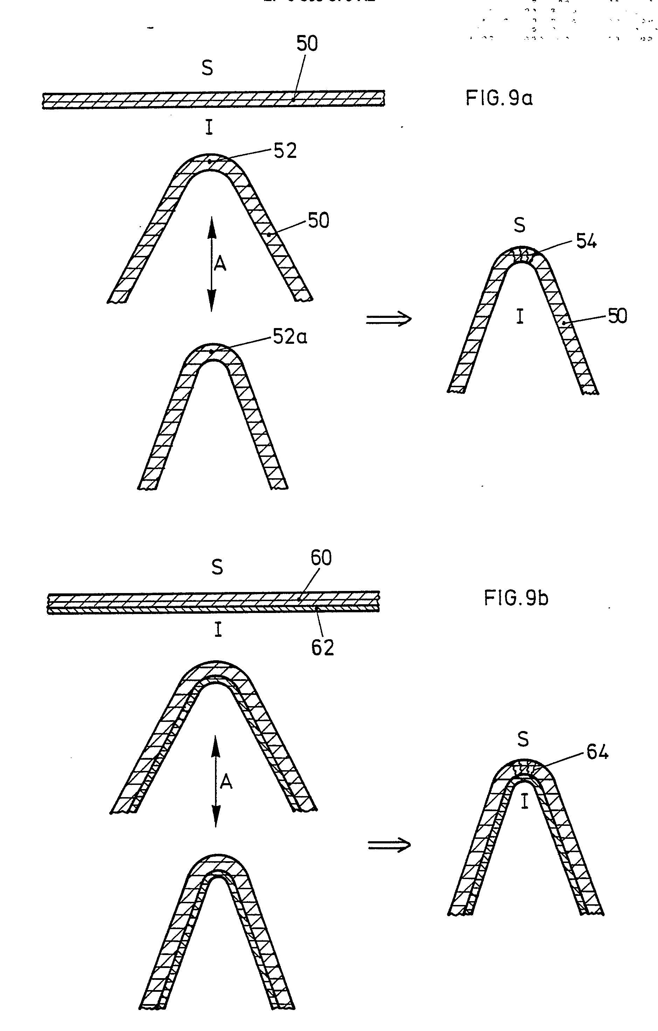

To make the different property of a known one-layer structure and an inventive at least two-layer structure, figs. 9a and 9b are to be considered.

In fig. 9a a structure of plastic material is made of one layer 50. As this layer 50 shall be formed into a predetermined structure as shall be bent to form a corner 52 and then shall maintain this structure, for instance with the corner 52, the one layer structure is made of a relatively rigid plastic material. After the structure 50 has been formed into the desired structure, e.g. with corner 52, it is loaded by frequent changements of its structure, e.g. the corner 52 is flexed and deflexed into a sharper configuration 52a and back to the previous configuration 52 as shown by the vice-versa arrow A. Such a loading may occur by mechanical vibration, even at high frequencies, or by manual loading if the preselected structure or form is changed during time. The time varying loading represented by the arrow A results especially because the one layer 50 has to be made of relatively rigid material to maintain its shape, and as shown at the right hand side of fig. 9a in cracking of the layer 50 first at those parts which are most loaded by the deformations in time. Thus, in this example cracks 54 will occur first at the outer surface which then will propagate through the entire structure of the layer 50 up to the moment reaching the interior surface. At this moment the layer 50 which previously provided for a tight separation of a one sided space S with respect to another sided space I will not any more separate these two spaces S and I in a tight manner and thus will have to be replaced if this tightness was of importance.

According to fig. 9b to get rid of the problem generally disclosed in fig. 9a, the inventive layer structure comprises a first layer 60 and a second layer 62 as was disclosed previously in connection with the container use. The preferably thicker layer 60 is made as the layer 50 in known structures of relatively rigid plastic material to fulfil the requirements of self holding form-stability. The thinner layer 62 of the inventive layer structure processed, as was disclosed in connection with the use for containers, is made of the said flexible material. Thus, according to the invention, there is made a clear functional separation by the recognition that a rigid material layer would clearly solve the problems of form stability, but would never in a satisfying manner fulfil the requirements of long time tightness. On the other hand, the flexible layer 62 would never fulfil the requirements of form stability, but would, on its side, clearly fulfil the requirements of long time tightness.

If now the inventive structure is loaded as again shown by the double arrow A and as was described as an example for the known structure according to fig. 9a, this will again result in cracks 64, but only of the rigid material layer 60 and will thus not affect tightness which will be ensured by the flexible material layer 62, so that the overall lifetime of such an inventive structure used to tightly separate two areas S and I, will be significantly improved.

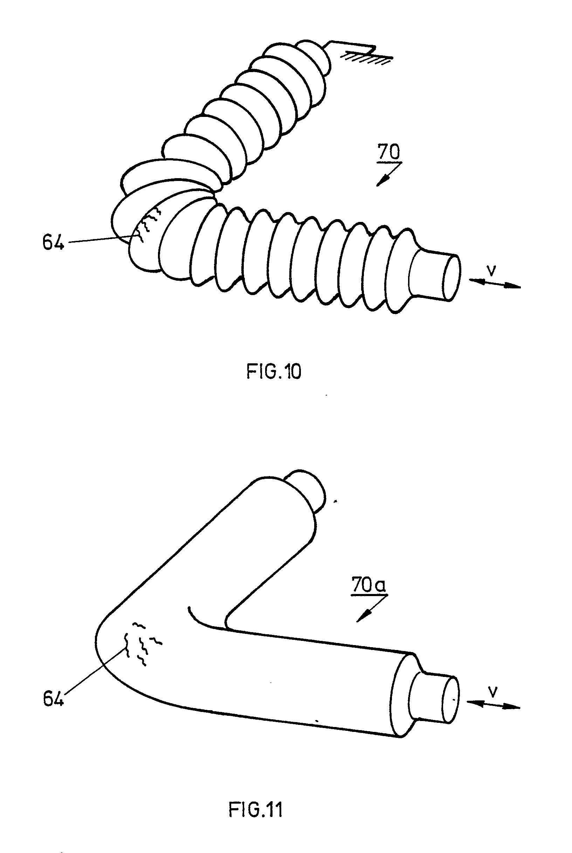

In fig. 10 there is shown an accordion structure tube 70, as it is used, for instance, in car manufacturing as for air pipes. With the use of the inventive layer structure according to fig. 9b, for such a pipe 70 lifetime of such pipes loaded by mechanical vibrations v is considerably improved. Additionally it becomes possible to preform such tube 70 just before mounting which makes this mounting easier compared with the mounting of such accordion structure tubes which are not self holding in a shape to which they just have been brought. Additionally much less care and less expensive material may be used for such tubes as now tightness is ensured by a thin layer as layer 62 of fig. 9b, and form stability by the thick rigid layer 60, so that the respective materials may be chosen for their specifically fulfilled objects and there need not be used an expensive material which will fulfil, best possible, both requirements. Even if the cracks 64 as shown in the fig. 10 tube occur, the thin flexible layer 62 covering the inside of that tube will make sure that the tube keeps tight.

When considering that in fact the accordion structure of such tube 70 especially for car applications is primarily provided to ensure long time tightness behaviour even under mechanical vibrations, one comes to the conclusion that for such tubes one may become rid of the necessity to provide for such an accordion structure which is very expensive in production and one may just use flat surfaced pipes 70a, as shown in fig. 11, manufactured with an at least two layer structure as shown in fig. 9b. Clearly such a flat surfaced tube will tend to crack earlier than an accordion shaped tube as shown in fig. 10, but as here again the flexible inside layer 62 will withstand cracking practically for an indefinite time, the outside cracking will not harm the function of such a tube 70a, as form stability will be maintained by the even cracked outside layer 60 and thus the specific function of this rigid layer 60 will be fulfilled independent of the occurrence of cracks 64 as shown in fig. 11.

It goes without saying that production of such flat surfaced tubes 70a will be much cheaper than that of accordion shaped tubes 70, but such flat surfaced tubes 70a will have lifetimes which are much longer than that of accordion structured tubes of one-layer structured material as shown in fig. 9a.

Thus, the generic concept of separating two functions which must be fulfilled by a plastic layer structure, providing a first layer for one function and a second layer for the second function, and not trying to combine both functions with an expensive material, allows for a multitude of applications of such one layer structures at considerably reduced material and manufacturing price, keeping lifetime of such members at least as long as lifetime of such members produced by known one-plastic layer structures.

## Claims

1. A layer structure, comprising at least two compatible layers, integrally bonded together, one layer being formed of a substantially rigid plastic material, to allow said layer structure to be used or formed according to mechanical properties of said one layer, the other layer being formed of a substantially flexible plastic material to allow said layer structure to keep tightness properties of said flexible plastic material when being used or formed according to said properties of said one layer.

2. The layer structure according to at least one of the claims, as according to claim 1, and being accordion like folded and being deformable in an accordion like manner, thereby keeping at least substantially the configuration to which it is deformed by said mechanical properties of said one layer.

3. The layer structure according to at least one of the claims, as according to claim 2, being formed as a tube like member, having accordion like ribs arranged coaxially around a tube axis.

4. A container with a portion made of a structure according to at least one of claims 1 to 3.

5. The container according to claim 4, having integral therewith a flexible neck portion with a smaller cross section area than the container, the neck portion comprising a plurality of shaped accordion ribs around the neck portion extending for at least a part of the length of the neck portion, such that an integral pouring spout at the end of the neck portion can be flexed to a flexed position from a previous position to accommodate pouring and generally retain the flexed position, the neck portion being formed at least in part of said at least two compatible layers.

6. A layer structure according to at least one of the claims, as according to claims 1 to 3, or a container, according to at least one of the claims, as according to claim 4 or 5, wherein said two layers are coextruded to form a parison.

7. The container according to at least one of the claims, as according to one of the claims 4 to 6, wherein it is blow molded and said two layers are coextruded to form a parison and then blown into the mold.

8. A layer structure according to at least one of the claims, as according to claim 3, or a container according to at least one of the claims, as according to one of the claims 4 to 7, wherein said one layer is on the outside of said tube member.

9. The layer structure or the container according to at least one of respective previous claims, wherein said one layer is made of a high density polyethylene and said other layer is made of a low density polyethylene copolymer.

10. The layer structure or the container according to at least one of the claims, as according to one of respective previous claims, wherein said one layer is made of rigid polyvinylchloride and said other layer of flexible polyvinylchloride.

11. The layer structure or the container, preferably according to at least one of the claims, as according to one of respective previous claims, wherein said other layer is not thicker than about 10% of the thickness of the layer structure.

12. The layer structure or the container, preferably according to at least one of the claims, as according to at least one of respective previous claims, where in said layer structure is formed as a tube like member, wherein the cross sectional shape of said tube like member is preferably round and a plurality of shaped accordion ribs are in a saw tooth configuration with tapered wall sections joining at inside corners and outside corners, the thickness of at least one of said two layers being greater at said corners than at said tapered wall sections.

13. The layer structure or the container, preferably according to at least one of the claims, as according to claim 12, wherein the thickness of the two layers increases at the corners to maintain a thickness ratio between the two layers substantially constant.

14. The layer structure or the container, preferably according to at least one of the claims, as according to claim 13, wherein the layer formed of substantially flexible material is on the inside of the tube like member.

15. The layer structure or the container, preferably according to at least one of the claims, as according to respective previous claims, wherein the thickness of said one and said other layer varies at least in one direction along said layer structure and wherein the thicknesses of said at least two layers have a substantially constant ratio.

16. The layer structure or the container, preferably according to at least one of the claims, as according to respective previous claims, said layer structure being formed as a tube like member and wherein the thickness of said two layers varies in axial direction of said tube like member and has a substantially constant ratio.

17. The layer structure or the container, preferably according to at least one of the claims, as according to at least one of respective previous claims, wherein the thickness of said two layers varies at least along one direction along said layer structure and wherein the thicknesses of said two layers have a variable ratio therealong.

18. The layer structure or the container, preferably according to at least one of the claims, as according to at least one of respective previous claims, wherein said layer structure is formed as a tube like mem ber, wherein the thickness of said two layers varies along axial direction of said tube like member and wherein the thicknesses of said two layers have a variable ratio therealong.

19. The container, preferably according to at least one of the claims, as according to respective previous claims, wherein said other layer extends beyond said layer structure on the inside and preferably throughout said container.

20. The container, preferably according to at least one of the claims, as according to claim 19, wherein said other layer is thinner along portions extending beyond said layer structure than it is along said layer structure.

21. The layer structure or the container, preferably according to at least one of the claims, as according to one of respective previous claims, including an additional layer of compatible plastic material integrally bonded between said one and said other layer.

22. The layer structure or the container, preferably according to at least one of the claims, as according to claim 21, wherein said additional layer is a barrier layer.

23. A process for producing a layer structure or a container with such a layer structure, preferably according to at least one of the claims, as according to respective previous claims, comprising the step of coextruding said one and said at least one other layer.

24. The process according to claim 23 for forming a plastic container, having integral therewith a flexible neck portion, including a plurality of shaped accordion ribs around the neck portion extending for at least a part of the length of the neck portion, wherein a parison of hot plastic material is extruded and subsequently blow molded in a mold, and at least a neck portion of the parison is coextruded with said at least two compatible layers, integrally bonded together, one layer of substantially rigid plastic material, the other of a substantially flexible plastic material.

25. The process, preferably according to at least one of the claims, as according to claim 23 or 24, wherein said other of said layers is not thicker than about 10% of the thickness of said layer structure.

26. The process, preferably according to at least one of the claims, as according to claim 24, wherein said other layer is on the inside of said neck portion and has a thickness not greater than about 10% of the thickness of the wall of said neck portion.

27. The process, preferably according to at least one of the claims, as according to one of the claims 23 to 26, wherein said coextruded layer structure is formed into an accordion like shape and wherein the thickness of said coextruded layer structure in a di rection substantially rectangularly to walls of said accordion shape, varies in accordance with a position along said accordion ribs, so that corners, where said ribs change direction, are thicker than remaining portions of said layer structure.

28. The process, preferably according to at least one of the claims, as according to claim 27, wherein the ratio between the thickness of the two layers remains substantially constant.

29. The process, preferably according to at least one of the claims, as according to claim 28, wherein the ratio between the thickness of said two layers varies.

30. The process, preferably according to at least one of the claims, as according to one of the claims 23 to 29, wherein said one coextruded layer is of high density polyethylene and said other coextruded layer is of low density polyethylene copolymer.

31. The process, preferably according to at least one of the claims, as according to one of the claims 23 to 29, wherein the one of said coextruded layers is of rigid polyvinylchloride and the other of said coextruded layers is of flexible polyvinylchloride.

32. The process, preferably according to at least one of the claims, as according to one of the claims 23 to 31, including extruding a third compatible layer integrally bonded between said one and said other coextruded layers.

.

8

FIG. 1

FIG.2

24

26

20

FIG.3

24

26

20

26

24

FIG.4

30

36

34

32

38

34

FIG.5

FIG.7

FIG.6

FIG.8

FIG.9a

S

50

I

52

50

A

52a

S

54

I

50

FIG.9b

S

60

I

62

A

S

64

I

FIG.10

FIG.11